# EUROPÄISCHE PATENTANMELDUNG

(11) **EP 0 685 427 A1**
(43) Veröffentlichungstag der Anmeldung: **06.12.1995**
(21) Anmeldenummer: 95107155.4
(22) Anmeldetag: 11.05.1995
(51) Int. Cl.: C01B 31/02

(54) **Verfahren zur Anreicherung von Fullerenen mit mehr als 70 Kohlenstoff-Atomen**

(30) Priorität: 24.05.1994 DE 4418099
(71) Anmelder: HOECHST AKTIENGESELLSCHAFT, D-65929 Frankfurt am Main (DE)
(72) Erfinder: Müller, Wolfgang, Dr., D-65207 Wiesbaden (DE)

(57) **Zusammenfassung**

Die Erfindung betrifft ein Verfahren zur Anreicherung von Fullerenen mit mehr als 70 C-Atomen, das dadurch gekennzeichnet ist, daß
a) eine Lösung eines Fullerenrohextraktes auf ein Trennsystem, enthaltend eine Vor- und eine Hauptsäule, beladen mit Koks, Anthrazit und/oder Graphit als Trägermaterial, aufgetragen wird, danach
b) die Vorsäule von dem Trennsystem abgekoppelt wird und
c) die auf der Vorsäule absorbierten Fullerene mit mehr als 70 C-Atomen mit einem unpolaren aromatischen Lösemittel von der Vorsäule desorbiert werden.

## Beschreibung

Die üblicherweise mit dem Lichtbogen- oder Widerstandsheizungsverfahren hergestellten Fullerenruße enthalten - neben C₆₀ und C₇₀ - noch sogenannte höhere Fullerene mit mehr als 70 C-Atomen.

Nach der Extraktion des Fullerenrußes mit Benzol oder Toluol enthält der Rohextrakt normalerweise nur etwa 1 bis 2 Gew.-% eines komplexen Gemisches an höheren Fullerenen.

Nur durch Verwendung speziell präparierter, nicht kommerziell erhältlicher Elektroden konnte dieser Anteil erstmals auf ca. 10 % gesteigert werden (Bethune et al. US-A-5 275 705).

Die Reindarstellung der höheren Fullerene, ausgehend vom Rohextrakt, ist durch chromatographische Trennung gelungen (D. Herren, J. Chromatogr. 644(1), 188 bis 192, 1993).

Besonders interessant ist, daß auch Stereoisomere von höheren Fullerenen aufgetrennt werden können.

Somit bietet diese Substanzklasse die einmalige Möglichkeit zum Studium von enantiomeren und diastereomeren Formen des Elements Kohlenstoff.

Es bestand daher die Aufgabe ein verbessertes, großtechnisch nutzbares Verfahren zu entwickeln, das Fullerene mit mehr als 70 C-Atomen in höheren Ausbeuten liefert.

Gegenstand der Erfindung ist ein Verfahren zur Anreicherung von Fullerenen mit mehr als 70 C-Atomen, dadurch gekennzeichnet, daß
a) ein Fullerenrohextrakt auf ein Trennsystem, enthaltend eine Vor- und eine Hauptsäule vorzugsweise in einem Volumenverhältnis von 1:20 bis 1:40, beladen mit Koks, Anthrazit und/oder Graphit als Trägermaterial, aufgetragen wird, danach
b) die Vorsäule von dem Trennsystem abgekoppelt wird und
c) die auf der Vorsäule absorbierten Fullerene mit mehr als 70 C-Atomen mit einem unpolaren aromatischen Lösemittel von der Vorsäule desorbiert werden.

Der Fullerenrohextrakt ist durch fest/flüssig-Extraktion von fullerenhaltigem Ruß, gewonnen durch das Lichtbogenverfahren, mit einem unpolaren organischen Lösemittel wie in WO 92/04279 beschrieben, erhältlich.
Die Extraktion wird vorteilhaft mit einem aromatischen Lösemittel, das auch für das erfindungsgemäße Verfahren geeignet ist, durchgeführt. Beispiele für ein solches Lösemittel, das auch für die Verfahrensschritte a) und c) geeignet ist, sind Benzol, Toluol, Xylol, Mesitylen, C₂-C₄-Alkylbenzol, Tetralin, Naphthalin, 1- und/oder 2-Methylnaphthalin, C₂-C₄-Alkylnaphthalin, Anisol, Phenetol, Nerolin, Ethoxynaphthalin sowie Fluor-, Chlor-, Dichlor-, Trichlor- und Brombenzol.

Es können auch homogene Mischungen der genannten Lösemittel untereinander oder homogene Mischungen mit nicht-aromatischen Lösemitteln, wobei der Gehalt an aromatischen Lösemittel immer Hauptbestandteil sein muß, verwendet werden.

Bevorzugt werden Benzol oder Toluol, besonders bevorzugt Toluol, als Lösemittel verwendet.

Der Fullerenrohextrakt wird im allgemeinen als gesättigte Lösung, enthaltend 0,5 bis 10, vorzugsweise 1 bis 2, Gew.-% der Fullerene > C₇₀, aufgetragen. Die Hauptkomponenten des Rohextraktes sind C₆₀ (ca. 80 Gew.-%) und C₇₀ (ca. 18 Gew.-%). Für das erfindungsgemäße Verfahren ist es vorteilhaft, wenn das aufgetragene Rohextraktvolumen 5 bis 10mal, vorzugsweise 7 bis 8mal, größer ist als das Vorsäulenvolumen.

Die Trägermaterialien Koks, Anthrazit und Graphit eignen sich aufgrund ihrer Gefügestruktur, Kristallmodifikation und Porosität in besonderer Weise zur beschriebenen Auftrennung von Fullerenen.

In diesem Sinne sind folgende Kohlenstoffmaterialien dazu geeignet:
I) Kokse auf Basis Petrolpech und Kohlepech;
II) Kokse, die über Mesophase hergestellt werden;
III) Kokse auf Basis Ruß;
IV) Anthrazit;
V) Graphite auf Basis von I) bis III);
VI) Gemische aus obigen Klassifikationen.

Der Aschegehalt der Trägermaterialien sollte wegen möglicher Wechselwirkungen begrenzt sein, beispielsweise auf < 1 bis 0,1 Gew.%, wobei auch höhere Werte noch tolerabel sein können. Welche Werte tolerabel sind kann in einfachen Versuchen ohne erfinderischen Aufwand festgestellt werden.

Die Kohlenstoffmaterialien müssen in gemahlener Form eingebracht werden, wobei die Mahlung nicht zu grob (fehlende Trennschärfe) und nicht zu fein (zu großer Strömungswiderstand) sein sollte. Beispielsweise eignet sich bevorzugt eine Körnung mit einem mittleren Korndurchmesser D (D 50 %) von ca. 10 bis 40 µm bei einer Schüttdichte von ca. 0,4 bis 0,6 g/cm³ und einer Stampfdichte von 0,8 bis 1,1 g/cm³.

Das Trägermaterial hat im allgemeinen eine BET-Oberfläche von 3 bis 15 m²/g, vorzugsweise 6 bis 8 m²/g.
Das Volumenverhältnis von Vorsäule zu Hauptsäule beträgt bevorzugt 1:25 bis 1:35.

Auf der Hauptsäule reichern sich überwiegend C₆₀- und C₇₀-Fullerene an. Sie können bei Bedarf nach dem in WO 94/06715 beschriebenen Verfahren aufgetrennt werden.

Das erfindungsgemäße Verfahren kann im Nieder-, Mittel und Hochdruckbereich in einem Temperaturbereich von 10 bis 50°C durchgeführt werden. Bevorzugt wird das Verfahren im Niederdruckbereich bis maximal ca. 2 bar bei einer Temperatur von 15 bis 25°C durchgeführt.

Es ist ein besonderer Vorteil des erfindungsgemäßen Verfahrens, daß für die einzelnen Verfahrensschritte kein Lösemittelwechsel erforderlich ist.

Durch das erfindungsgemäße Verfahren gelingt es einen Extrakt von Fullerenen bereitzustellen, der mehr als 50 Gew.-% an Fullerenen > C₇₀ enthält.
Mit einem solchen Konzentrat sind weitere chromatographische Trennschritte zur Reindarstellung höherer Fullerene in größeren Mengen viel effektiver.

Bedingt durch ihre elektrooptischen und elektromagnetischen Eigenschaften können Fullerene > C₇₀ auf dem Gebiet der molekularen Elektronik verwendet werden. Chirale Fullerene > C₇₀ können auch zur Herstellung von chiralen Trennsäulen zur Enantiomeren-Analyse verwendet werden.

### Beispiel 1:

Ein Trennsystem bestehend aus einer 5 l Vorsäule und einer 150 l-Hauptsäule wurde mit in Toluol aufgeschlämmten SIGRI-Graphit HR 70 (bestehend aus 2/3-Anthrazit und 1/3 Petrolgraphit des mittleren Korndurchmessers 38 µm der Schüttdichte 0,52 g/cm³ und der Hauptdichte 0,89 g/cm³) beladen und das Säulenmaterial mit 0,5 bar verdichtet.

Danach wurden 37,5 l eines gesättigten Fullerenrohextraktes in Toluol auf das Trennsystem aufgetragen.
Anschließend wurden die Vor- und die Hauptsäule entkoppelt und individuell mit Toluol weitereluiert.

Nach Elution der Vorsäule mit 1 bis 2 Bettvolumen Toluol verschwand die typische orangebraune Färbung der C₆₀/C₇₀-Mixtur und man erhielt eine gelbbraune Nachfraktion.
Es wurde noch mit 5 bis 7 Bettvolumina Toluol nacheluiert und die Fraktionen eingeengt.
Laut HPLC-Analyse enthält diese Fraktion 1,14 g Fulleren > C₇₀ (57 % d.T.).

## Patentansprüche

1. Verfahren zur Anreicherung von Fullerenen mit mehr als 70 C-Atomen, dadurch gekennzeichnet, daß
a) eine Lösung eines Fullerenrohextraktes auf ein Trennsystem, enthaltend eine Vor- und eine Hauptsäule, beladen mit Koks, Anthrazit und/oder Graphit als Trägermaterial, aufgetragen wird, danach
b) die Vorsäule von dem Trennsystem abgekoppelt wird und
c) die auf der Vorsäule absorbierten Fullerene mit mehr als 70 C-Atomen mit einem unpolaren aromatischen Lösemittel von der Vorsäule desorbiert werden.

2. Verfahren gemaß Anspruch 1, dadurch gekennzeichnet, daß als Lösemittel Benzol oder Toluol eingesetzt wird.

3. Verfahren gemaß Anspruch 1 oder 2, dadurch gekennzeichnet, daß das Fullerenrohextraktvolumen 5 bis 10mal größer ist als das Vorsäulenvolumen.

4. Verfahren gemaß Anspruch 1, dadurch gekennzeichnet, daß das Volumenverhältnis von Vor- zur Hauptsäule im Bereich von 1:20 bis 1:40 liegt.

5. Verwendung von Fullerenen mit mehr als 70 C-Atomen in der molekularen Elektronik.
